# DEMANDE DE BREVET EUROPEEN

(11) **EP 1 491 861 A1**
(43) Date de publication de la demande: **29.12.2004**
(21) Numéro de dépôt: 04364044.0
(22) Date de dépôt: 22.06.2004
(51) Int. Cl.: G01C 21/36, G06K 19/06, G09B 29/10

(54) **Navigation mettant en oeuvre un document sur lequel sont imprimées des données géographiques comprenant la lecture d'une adresse logique associée à une partie dudit document**

(30) Priorité: 23.06.2003 FR 0307580
(71) Demandeur: Groupe Silicomp, 38330 Montbonnot Saint Martin (FR)
(72) Inventeur: Joloboff, Vania, 35000 Rennes (FR)
(74) Mandataire: Vidon, Patrice

(57) **Abrégé**

L'invention concerne un procédé de navigation mettant en oeuvre un document (10, 70) sur lequel sont imprimées des données géographiques, et comprenant :
- une sélection et une lecture d'au moins une adresse logique (40, 50) associée à au moins une partie du document ;
- une association (32, 34, 82, 83) de la ou des adresses logiques sélectionnées à au moins une information géographique (41), l'association étant mise en oeuvre par des moyens de traitement ; et
- un transfert (34) de la ou des informations géographiques à des moyens de navigation.

L'invention concerne également un dispositif, un système et des programmes d'ordinateur correspondant.

## Description

La présente invention se rapporte au domaine des procédés de navigation., permettant notamment de déterminer une position géographique pour, par exemple, se localiser, déterminer un trajet entre deux points, ...

### 1. Etat de l'art.

Selon l'état de l'art, des systèmes de navigation, notamment de type GPS (de l'anglais « Global Positionning System »), Galileo ou de type radio goniométrie permettent à un utilisateur (par exemple un automobiliste, un marin ou un piéton) de connaître sa position géographique courante (longitude, latitude).

Ces systèmes sont bien adaptés à la détermination de la localisation courante de l'utilisateur.

Lorsque l'utilisateur souhaite déterminer un trajet à l'aide de ces systèmes, il doit saisir des noms de lieux (villes, villages, lieux-dits, ...) à l'aide typiquement d'un clavier alphabétique. Même s'il existe des améliorations permettant de limiter l'intervention de l'utilisateut (par exemple, saisie des premiers caractères du nom d'un lieu suffisante pour éliminer les ambiguïtés), ces systèmes de l'état de la technique présentent l'inconvénient d'être fastidieux à utiliser et peu ergonomiques.

De plus, ces appareils de navigation ont généralement une base de données interne relativement limitée qui contient, par exemple, uniquement des noms de lieux ou de rues, l'utilisateur ne pouvant pas saisir un autre type d'information notamment le nom d'une enseigne commerciale.

### 2. Objectifs de l'invention

L'invention selon ses différents aspects a notamment pour objectif de pallier ces inconvénients de l'art antérieur.

Plus précisément, un objectif de l'invention est de fournir un procédé de navigation souple à utiliser et ergonomique.

Un autre objectif de l'invention est de mettre en oeuvre un procédé de navigation permettant une utilisation de supports en papier couramment utilisés tels que des cartes géographiques (notamment cartes routières, plans de ville, ...) et/ou des supports avec texte imprimés (par exemple, guide ou annuaire avec adresses, journaux, documents publicitaires,...).

L'invention a également pour objectif la mise en oeuvre d'un procédé de navigation ne nécessitant pas la mémorisation complète des informations associées à une zone géographique ou un lieu dans un dispositif de navigation.

### 3. Présentation de l'invention

Dans ce but, l'invention propose un procédé de navigation mettant en oeuvre un document sur lequel sont imprimées des données géographiques, et comprenant :
- une étape de sélection et de lecture d'au moins une adresse logique associée à au moins une partie du document ;
- une étape d'association de la ou des adresses logiques sélectionnées à au moins une information géographique, l'étape d'association étant mise en oeuvre par des moyens de traitement ; et
- une étape de transfert de la ou des informations géographiques à des moyens de navigation.

Ainsi, le document comprend des informations géographiques imprimées (par exemple carte, information textuelle) et tout le document ou une partie de ce document comprend également des informations d'adresses que peuvent lire des moyens de lecture adaptés. Des moyens de traitement peuvent alors associer la ou les adresses logiques lues à des informations géographiques de tout type (nom de lieu, coordonnées géographiques, adresses, ...). Les informations géographiques ainsi obtenues peuvent être alors transférées à des moyens de navigation appropriés pour, par exemple, calculer des distances, déterminer des trajets, identifier des lieux géographiques, ....

Selon une caractéristique particulière, le procédé est remarquable en ce que l'étape d'association comprend une étape de recherche de la ou des adresses sélectionnées dans une table locale (par exemple mémorisée sur un disque dur ou un support amovible quelconque) ou distante (par exemple accessible via un réseau de type internet) et faisant correspondre un ensemble d'adresses à un ensemble de lieux géographiques et d'au moins un lieu géographique sélectionné correspondant à la ou aux adresses sélectionnées.

Ainsi, le procédé permet de déterminer directement un lieu à partir de son adresse sélectionnée, ce qui permet de réduire les calculs.

Selon une caractéristique particulière, le procédé est remarquable en ce que l'étape d'association comprend :
- une étape de recherche de la ou des adresses sélectionnées dans une table faisant correspondre un ensemble d'adresses à un ensemble d'au moins un document référencé ; et
- une étape d'identification du document dans l'ensemble d'au moins un document référencé.

Selon une caractéristique particulière, le procédé est remarquable en ce que l'étape d'association comprend une étape de calcul d'au moins une position relative de la ou des adresses sélectionnées à l'intérieur du document.

Selon une caractéristique particulière, le procédé est remarquable en ce que l'étape d'association comprend une étape de détermination d'au moins un lieu géographique sélectionné à partir de la ou des positions relatives.

Ainsi, le procédé permet d'abord d'identifier le document et ensuite de déterminer un lieu en fonction de la position relative d'une adresse à l'intérieur du document. De cette manière, la quantité d'information mémorisée (notamment d'adressage) peut-être réduite. La table faisant correspondre un ensemble d'adresses à un ensemble d'au moins un document référencé et les données permettant la détermination d'au moins un lieu géographique sélectionné à partir de la ou des positions relatives peuvent, selon l'invention, être locales (par exemple mémorisée sur un disque dur ou un support amovible quelconque) et/ou distantes (par exemple accessible via un réseau de type internet).

Selon une caractéristique particulière, le procédé est remarquable en ce que des adresses logiques sélectionnées forment une séquence ordonnée, l'étape d'association associant la séquence à une suite ordonnée de lieux géographiques et l'étape de transfert transmettant la suite ordonnée aux moyens de navigation.

Ainsi, selon le procédé, on peut traiter plusieurs adresses logiques selon une séquence ordonnée et ainsi obtenir la suite ordonnée de lieux géographiques correspondante, ce qui peut être utile pour de nombreuses opérations de navigation (notamment pour la détermination de trajets reliant deux points extrêmes et passant ou non par des lieux sélectionnés.

Selon une caractéristique particulière, le procédé est remarquable en ce que la séquence correspond à une courbe sensiblement continue sur le document.

Selon une caractéristique particulière, le procédé est remarquable en ce que l'étape de sélection comprend une étape d'identification d'une boucle fermée dans une suite d'adresses sélectionnée et d'extraction des adresses logiques sélectionnées appartenant à la boucle fermée pour former la séquence ordonnée.

De cette manière, le procédé est particulièrement bien adapté à une détermination ergonomique d'une zone géographique.

Selon une caractéristique particulière, le procédé est remarquable en ce que les moyens de navigation mettent en oeuvre une étape de navigation appartenant au groupe comprenant :
- les déterminations d'itinéraires ;
- les détermination de distance ;
- les détermination de géocentres d'une zône géographique ; et
- l'aide à la navigation en temps réel pour véhicule.
   Selon une caractéristique particulière, le procédé est remarquable en ce que des informations représentatives de commandes sont imprimées sur le document et en ce que le procédé comprend, en outre, les étapes suivantes
- association de la ou des adresses logiques sélectionnées en au moins une information de commande, l'étape d'association étant mise en oeuvre par les moyens de traitement ; et
- exécution de la commande correspondant à la ou aux informations de commande associées à la ou aux adresses logiques sélectionnées.

Ainsi, l'utilisateur utilise le document pour à la fois sélectionner des informations imprimées relatives à des lieux géographiques et à des commandes et n'a pas besoin d'avoir recours à une interface de commande spécifiques hormis sur les moyens de lecture de bas niveau (saisie d'un point ou d'une courbe). Ainsi, l'interface utilisateur repose essentiellement sur le document, ce qui permet une grande souplesse d'utilisation ou ergonomie, ainsi qu'une bonne adaptation des commandes au type d'informations géographiques imprimées sur le document (par exemple commande de type détermination de trajet pour une carte routière et de type adresse pour un guide comprenant un nom de restaurant).

Selon une caractéristique particulière, le procédé est remarquable en ce que la commande appartient au groupe comprenant :
- les commandes de mode opératoire associé à une étape de navigation ; et
- les commandes s'appliquant à l'étape de sélection et de lecture d'au moins une adresse logique.

De cette manière, les commandes tout en étant variées restent adaptées au support et concernent notamment le mode opératoire associé à une étape de navigation (par exemple détermination de trajet ou identification de lieu) et les commandes, par exemple de type « fin de saisie d'adresses logiques » ou « retour en arrière (ou effacement d'adresses sélectionnées) »

Selon une caractéristique particulière, le procédé est remarquable en ce qu'il comprend une étape d'affichage de la ou des informations géographiques associées à des adresses logiques sélectionnées.

Ainsi, l'utilisateur peut contrôler en temps réel sa sélection et réagir de manière adaptée.

L'invention concerne aussi un dispositif de navigation mettant en oeuvre un document sur lequel sont imprimées des données géographiques, remarquable en ce qu'il comprend :
- des moyens de sélection et de lecture d'au moins une adresse logique associée à au moins une partie du document ;
- des moyens de traitement adaptés à associer la ou les adresses logiques sélectionnées à au moins une information géographique; et
- des moyens de transfert de la ou des informations géographiques à des moyens de navigation.

En outre, l'invention concerne un système de navigation mettant en oeuvre un document sur lequel sont imprimées des données géographiques, remarquable en ce qu'il comprend au moins un dispositif comprenant:
- des moyens de sélection et de lecture d'au moins une adresse logique associée à au moins une partie du document ;
- des moyens de traitement adaptés à associer la ou les adresses logiques sélectionnées à au moins une information géographique; et
- des moyens de transfert de la ou des informations géographiques à des moyens de navigation.

De plus, l'invention concerne un produit programme d'ordinateur comprenant des éléments de programme, enregistrés sur un support lisible par au moins un microprocesseur, remarquable en ce que les éléments de programme contrôlent le ou les microprocesseurs pour qu'ils effectuent :
- une étape de sélection et de lecture d'au moins une adresse logique associée à au moins une partie d'un document sur lequel sont imprimées des données géographiques; et
- une étape d'association de la ou des adresses logiques sélectionnées à au moins une information géographique, l'étape d'association étant mise en oeuvre par des moyens de traitement ; et
- une étape de transfert de la ou des informations géographiques à des moyens de navigation.

L'invention concerne également un produit programme d'ordinateur, comprenant des séquences d'instructions adaptées à la mise en oeuvre d'un procédé de navigation tel que décrit précédemment lorsque le programme est exécuté sur un ordinateur.

Les avantages des systèmes, dispositifs de navigation et programmes d'ordinateur sont les mêmes que ceux du procédé de navigation, ils ne sont pas détaillés plus amplement.

### 4. Liste des figures.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique d'un système de navigation conforme à l'invention selon un mode particulier de réalisation ;
- la figure 2 illustre un dispositif de navigation mis en oeuvre dans le système de la figure 1 ;
- la figure 3 décrit un algorithme de traitement et de détermination de lieux géographiques, mis en oeuvre dans le dispositif de navigation selon la figure 2;
- les figures 4, 5A et 5B illustrent des moyens permettant la détermination d'un lieu selon l'algorithme de la figure 3 ; et
- les figures 6 et 7 présentent des supports d'information du système de navigation selon l'invention ;
- la figure 8 décrit un algorithme de traitement et de détermination de lieux géographiques selon une variante de l'invention; et
- les figures 9 et 9A illustrent un support d'information du système de naviagation selon une variante de l'invention particulièrement bien adapté à l'algorithme présenté en regard de la figure 8.

Le principe général de l'invention repose sur une détermination d'adresses codées sur des supports adressables sur lesquels sont imprimées des informations lisibles directement par un utilisateur, un traitement particulier des adresses ou code étant mis en oeuvre lorsqu'un utilisateur pointe une zone ou un lieu précis sur un tel support.

Il existe, en effet, des procédés de reconnaissance d'image permettant d'identifier l'emplacement d'une information imprimée sur un support physique visible à l'oeil humain. Ce support physique peut être par exemple une carte géographique terrestre ou marine, un guide de voyage, un guide touristique, ou un support publicitaire.

En particulier, des supports adressables sont décrits dans la demande de brevet internationale WO 01/26032 intitulée « papier codé pour lecture optique » et déposée par la société ANOTO ®. Ces supports contiennent des marques préimprimées, lisibles par une caméra infra-rouge, les marques étant positionnées de manière précise sur le support, en respectant un motif prédéterminé qui permet d'identifier sans ambiguïté le support en question, les motifs associés à deux supports distincts étant préférentiellement différents. Plus précisément, les marques sont positionnées de manière précise par rapport à une position nominale de référence. Des procédés correspondants, de détermination de la position d'un code sur de tels supports sont décrits dans les demandes de brevet internationales du même déposant WO 01/26033 et WO 01/26034. La technologie illustrée dans ces demandes de brevet est basée sur une caméra mettant en oeuvre une reconnaissance d'image qui permet d'identifier une référence du document imprimé et codé selon la technologie de la demande internationale WO 01/26032 et un endroit du document pointé par la caméra de connaître avec une grande précision (de l'ordre du millimètre).

Selon l'invention, des supports sur lequels sont imprimées des informations représentatives d'une localisation géographique (carte géographique, texte indiquant un nom de lieu ou pouvant être associé à un nom de lieu notamment) sont codés selon le procédé de la société Anoto ® précédemment mentionné. Un utilisateur pointe une zone ou un point précis du document avec une caméra permettant de déterminer une ou plusieurs adresses associées à la ou aux zones pointées. Ces adresses sont ensuites transmises à des moyens de traitement qui détermine un lieu pointé à partir de bases de données contenant une liste d'adresses de documents adressable et des informations représentatives du lieux géographiques associés. Lorsque le ou les lieux géographiques sont identifiés des traitements complémentaires de présentation du résultat à l'utilisateur, de calcul de distance, de détermination de trajet, de guidage, .... peuvent être mis en oeuvre.

### 5. Description selon un mode de réalisation préférentiel de l'invention.

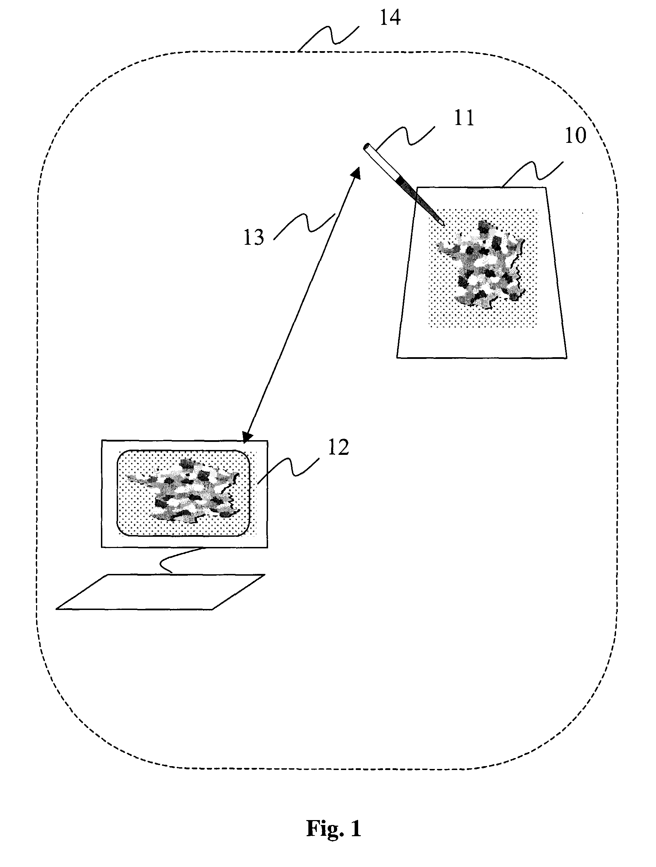

On présente, en relation avec la **figure 1**, un mode de réalisation d'un système de navigation 14 conforme à l'invention. Le système de navigation 14 comprend :
- une page 10 contenant des informations lisibles par un utilisateur (par exemple une carte) et des trames adressables selon le procédé Anoto ® tel que décrit dans la demande de brevet internationale WO 01/26032 ;
- un crayon 11 (par exemple fabriqué par les sociétés Logitech ® ou Nokia ®) comprenant une caméra infra-rouge et des moyens de reconnaissance permettant de lire les codes d'adresses de la page 10 tels que décrits dans les demandes de brevet internationales WO 01/26033 et WO 01/26034 ; et
- un terminal 12.

Le terminal 12 et le crayon comprennent également des moyens de communication permettant au crayon 11 de transmettre, via une liaison sans fil 13, des informations d'adresses de la page 10 au terminal 12 lorsque l'utilisateur le souhaite (par exemple, par action sur le crayon d'un bouton dédié, que l'utilisateur aura positionné sur le document à un endroit contenant l'information pertinente, lisible par l'utilisateur de sorte à ce que la caméra du crayon 11 puisse saisir l'information correspondant aux trames adressables ; en pressant de manière discontinu le bouton sur le ). De plus, le terminal 12 comprend :
- des moyens de traitement des informations reçues ;
- une base de données d'adresses de documents contenant des informations géographiques ;
- une base de données d'informations géographiques associées ; et
- des moyens de dialogue avec un utilisateur, notamment un écran permettant le résultat de traitement des informations reçues.

Si la page 10 comprend une carte, par action sur le crayon 11, l'utilisateur demande au crayon de lire une ou plusieurs adresses correspondant à la page 10 ou à une zone de la page 10 et de les transmettre au terminal 12. Le terminal 12 reçoit la ou les adresses transmises, identifie à partir de ces dernières la page 10 puis affiche sur son écran les informations contenues dans la page 10.

Selon une variante de l'invention, le crayon 11 est remplacé par un terminal de télécommunication mobile muni d'une caméra.

Selon une variante de l'invention, le terminal 12 est de type tableau de bord d'un véhicule (par exemple automobile) ou de type navigateur automobile ou de tout autre véhicule.

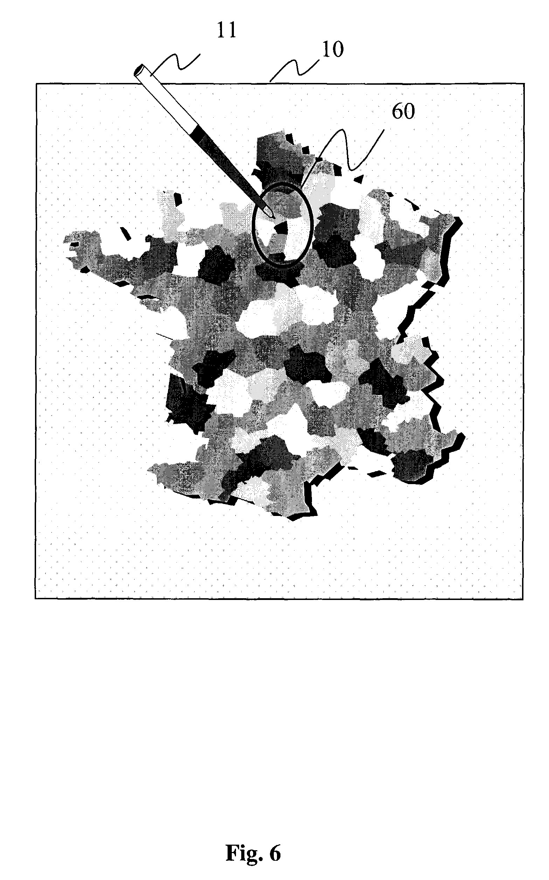

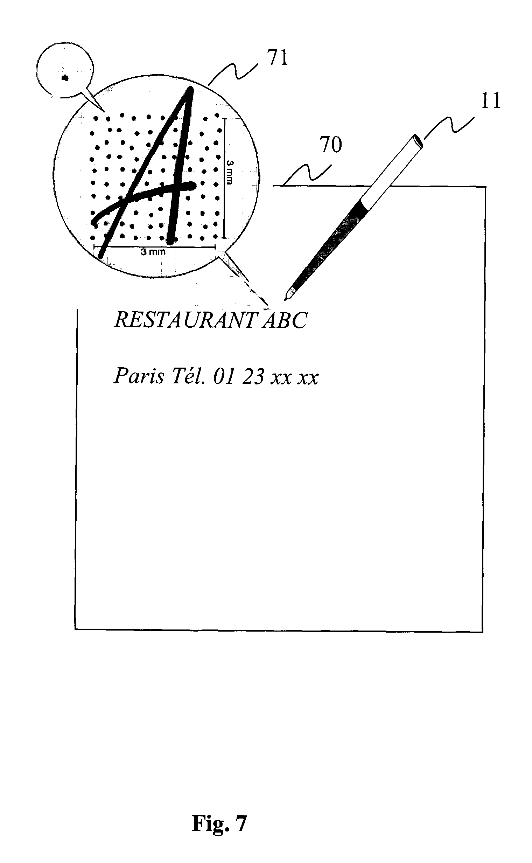

Les figures 6 et 7 illustrent des documents pouvant être lus selon l'invention.

Ainsi, la **figure 6**, présente le document 10 qui comprend une information de type carte lisible par l'utilisateur. Cette carte a été imprimée sur un support contenant les informations d'adresses logiques préimprimées, propres à ce support. Ainsi, les adresses logiques permettent d'identifier sans ambiguïté le support du document 10 et donc la carte imprimée sur le document 10.

Lorsque l'on place le crayon 11 sur le document 10, le crayon 11 reconnaît la zone qu'il pointe.

L'utilisateur ayant placé le dispositif sur le document 10 peut actionner le crayon 11 pour saisir une ou plusieurs informations successives. Par exemple, l'utilisateur peut placer le dispositif sur la carte géographique du document 10 et indiquer un seul point ou bien plusieurs points en déplacant le dispositif à chaque fois, éventuellement sur plusieurs pages différentes d'un même document 10. L'utilisateur peut également, selon l'invention, pointer des pages différentes de plusieurs documents, ou encore actionner le dispositif en continu pour tracer une courbe qui peut être ouverte formant ainsi une trajectoire ou fermée délimitant ainsi une région (comme la zone 60 illustrée en regard de la figure 6).

Selon l'invention après transmission des adresses correspondant à la zone 60 sélectionnée, du crayon 11 vers le terminal 12, ce dernier détermine la zone pointée (par exemple, ville, région, quartier, rue, ...) en fonction des adresses reçues et du contenu de ses bases de données.

La **figure 7** illustre un document 70 (par exemple de type guide) présentant des informations textuelles correspondant également à des zones géographiques.

Plus précisément, le document 70 comprend, par exemple, un nom de restaurant (« *Restaurant ABC* »), une adresse (« *Paris* ») et un numéro de téléphone (« *01 23 xx* »).

Selon l'exemple donné, le crayon 11 identifie un point 71 correspondant à une lettre du nom du restaurant. Le point 71 comprend notamment la lettre du nom du restaurant visible à l'oeil nu et des informations d'adresse logique sous forme de points non visibles à l'oeil nu, positionnés sur une trame en fonction de l'adresse logique et dont les positions sont identifiables par le crayon 11

Selon l'invention après transmission de l'adresse logique correspondant au point 60 sélectionné, du crayon 11 vers le terminal 12, ce dernier détermine le point sélectionné et donc le lieu géographique correspondant (ici le restaurant *« restaurant ABC »* à Paris »). Ainsi, cette information peut être présentée à l'utilisateur sur l'écran du terminal 12 et être associée à d'autres informations, notamment itinéraire pour y aller, distance, ...

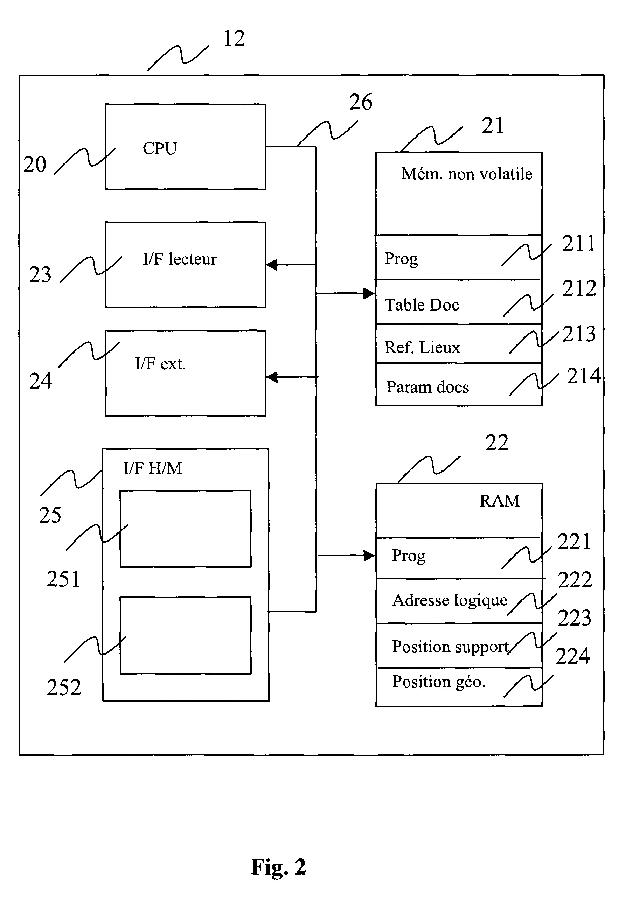

La **figure 2** illustre schématiquement le terminal 12 présenté en regard de la figure 1; Le terminal 12 comprend reliés entre eux par un bus d'adresses et de données :
- un processeur 20 ;
- une mémoire non volatile (ou mémoire rémanente) 21 ;
- une mémoire vive ou RAM (« Random Access Memory ») 22 ;
- une interface 23 permettant au terminal 12 de communiquer avec le crayon 11 via la liaison 13 ;
- une interface 24 vers un réseau de type Internet ; et
- une interface homme/machine 25 comprenant notamment un écran 251 et un clavier 252.

Chacun des éléments illustrés en figure 2 est bien connu de l'homme du métier. Ces éléments communs ne sont pas décrits ici.

On observe que le mot « registre » utilisé dans toute la description désigne dans chacune des mémoires mentionnées, aussi bien une zone de mémoire de faible capacité (quelques données binaires) qu'une zone mémoire de grande capacité (permettant de stocker un programme entier ou l'intégralité d'une séquence de données de transactions).

La mémoire non volatile 21 comprend un seul élément ou plusieurs élements séparés par exemple de type disque dur, CD-ROM ou DVD-ROM et moyens de lecture associés, et mémoire flash. Elle conserve dans des registres qui par commodité possèdent les mêmes noms que les données qu'ils conservent :
- le programme de fonctionnement du processeur 20 dans un registre « *prog* » 211 ,
- une table de documents 212 contenant des références (adresses selon le procédé Anoto ®) de documents ;
- une base de données 214 contenant des paramètres propres à des types de documents ;
- une base de données 213 contenant des informations géographiques correspondant aux documents référencés dans la table 212.

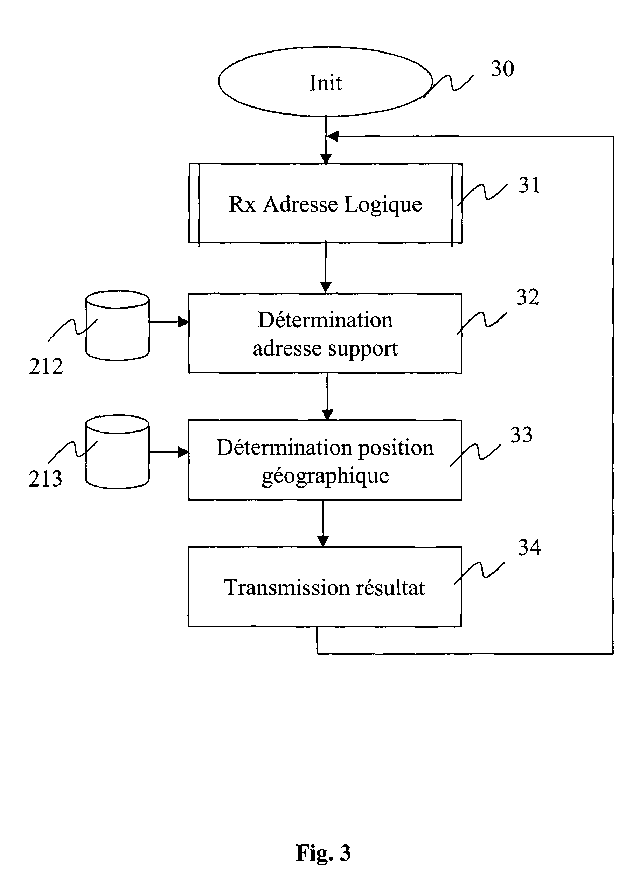

Les algorithmes mettant en oeuvre les étapes des procédés décrits ci-après, notamment en regard de la figure 3 sont stockés dans la mémoire rémanente 21 associé au terminal 12 mettant en oeuvre des étapes de cet algorithme. A la mise sous tension, le processeur 20 charge et exécute les instructions de ces algorithmes.

La mémoire vive 22 conserve des données, des variables et des résultats intermédiaires de traitement et comprend notamment :
- le programme « *prog* » 221 de fonctionnement du processeur 20 chargé à la mise sous tension du terminal 12 ;
- une ou plusieurs adresses logiques transmises par le crayon 11 dans un registre *adresse logique* 222 ;
- une ou plusieurs positions du crayon 11 sur le document lu dans un registre 223 ; et
- une ou plusieurs positions géographiques dans un registre 224.

La **figure 3** décrit un algorithme de traitement et de détermination de lieux géographiques, mis en oeuvre dans le terminal 12 et plus précisément par le processeur 20.

Au cours d'une première étape 30, le terminal 12 charge les différents programmes utiles à la navigation et initialise les données ou variables correspondantes.

Puis, au cours d'une étape 31, le terminal 12 attend puis reçoit une adresse logique A lue par le crayon 11 sur le document 10, et transmise via la liaison 14. L'adresse logique A est alors mémorisée dans le registre 222.

Ensuite, au cours d'étapes 32 et 33, le terminal détermine une position sur le document ou support 10 et un lieu géographique correspondant à la position déterminée en fonction de l'adresse logique A reçue lors de l'étape précédente et des informations issues des bases de données 212 à 214.

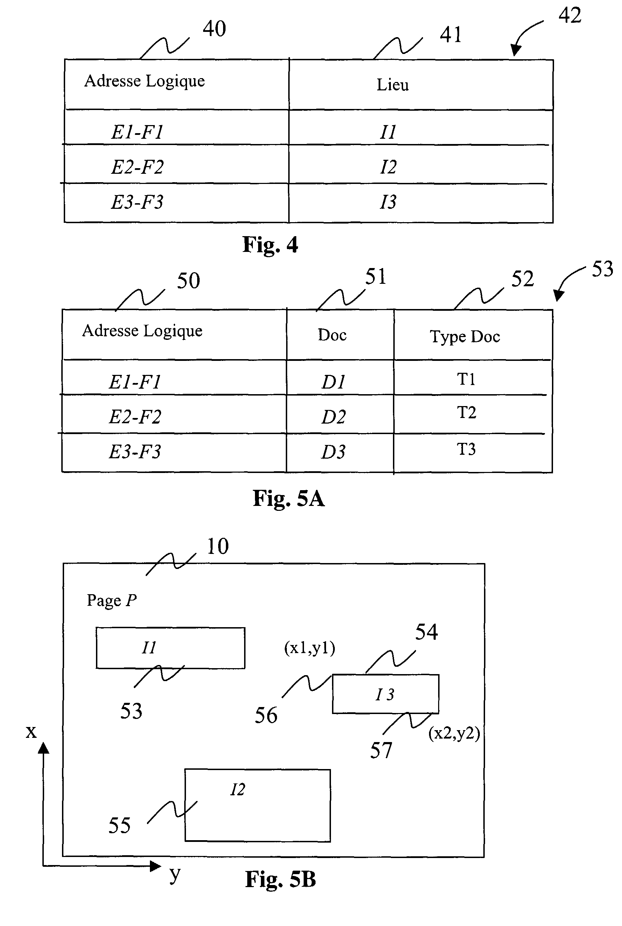

Plus précisément, les étapes 32 et 33 peuvent être mise en oeuvre suivant deux possibilités :
- selon une méthode directe, le terminal 12 fait correspondre directement l'adresse logique reçue à un lieu géographique en recherchant l'adresse dans la base de données 213 ; et
- selon une méthode indirecte, le terminal utilise de manière mixte les bases de données 212 à 214 et des calculs pour déterminer l'adresse logique.
   Pour la méthode directe, le terminal 12 met en oeuvre une table 42 illustrée en regard de la figure 4 et mémorisée dans le registre 213. La table 42 possède :

- en entrée, des plages 40 d'adresses logiques rangées en ordre croissant (par exemple une première plage contenant les adresses *E1* à *F1* (noté *E1-F1*), une deuxième plage *E2-F2,* une troisième plage *E3-F3*, etc). ; et
- en sortie des identifiants de lieu 41.

Ainsi, selon la méthode directe, le terminal 12 ayant reçu une adresse logique *A*, recherche, dans la table 42, la ligne de la table 251 ayant une plage *Ei-Fi* comprenant l'adresse *A* ( *Ei* < *A* < *Fi*) . L'information géographique associée à cette ligne est celle recherchée, correspondant à un lieu pointé par le crayon 11.

Pour mettre en oeuvre la méthode directe, la table 42 comprend une grande quantité d'informations, notamment les plages d'adresses correspondant aux lieux correspondant à de nombreux documents susceptibles d'être utilisés pour la navigation. Selon une variante de l'invention, la table 42 est mise en oeuvre dans un dispositif distant accessible par le terminal 12 via, par exemple, le réseau Internet.

La méthode indirecte a pour but de réduire la quantité d'information devant être mémorisée par le terminal 12. Selon la méthode indirecte, le terminal 12 utilise une ou plusieurs tables en cascade et effectue des calculs remplaçant ou réduisant la recherche dans une base de données. La recherche par la méthode indirecte permet aussi de combiner des méthodes de calcul différentes selon les types de documents, par exemple carte ou guide de voyage. En fonction du type de document, la recherche peut alors continuer en utilisant des méthodes de calcul différentes pour chaque type de document.

Pour la méthode indirecte, le terminal 12 met en oeuvre une table 53 illustrée en regard de la **figure 5A** et mémorisée dans le registre 212. La table 53 possède :
- en entrée, des plages 50 d'adresses logiques similaires aux plages 40 décrites précédemment; et
- en sortie des identifiants 51 de documents 51 et des types 52 de documents.

Ainsi, selon la méthode indirecte, au cours de l'étape 32, le terminal 12 ayant reçu une adresse logique A, recherche la ligne de la table 53 ayant une plage *Ei-Fi* comprenant l'adresse *A* ( *Ei* < *A* < *Fi*). Le document 51 associé à cette ligne et contenant une information géographique est celui recherché et son type 52 est déterminé (à titre illustratif, sur la figure 5A, une adresse *A* comprise entre *E2* et *F2* correspond au document *D2* de type *T2*).

Le terminal 12 comprend également une base de données ou table 214 détaillant les caractéristiques propres à chaque type 52 de document, possible.

On peut supposer, par exemple, que, le type *T2* correspond à des documents dont toutes les pages ou feuilles du document d'une taille donnée sont entièrement tramées sur une même surface. La base de données comprenant alors les caractéristiques suivantes pour *T2* :
- un paramètre indiquant le type de tramage (ici, ce paramètre correspond à un document entièrement tramée sur une surface) ;
- deux paramètres correspondant respectivement aux résolutions horizontale *H* et verticale *V* (pour un document T2, les valeurs des résolutions *H* et *V* indiquent que sur chaque feuille d'un document de type *T2*, une matrice de *V* lignes par *H* colonnes d'adresses est imprimée soit au total *M* adresses logiques croissantes par page, *M* étant égal au produit de *H* par *V (M* = *H. V).*

Selon la méthode indirecte, au cours de l'étape 32, le terminal 12 calcule la position pointée par le crayon 11 par la méthode suivante. Soit *A* l'addresse logique et E2 l'adresse logique de début du document, l'adresse relative *N* à l'intérieur du document est égal à la différence de *A* et de *E2* (*N* = *A* - *E2*).

Le quotient *Q* de la division entière de l'adresse relative *N* par le nombre *M* d'adresses logiques par page, auquel on ajoute 1, indique sur quelle page (*Q*+1) pointe le crayon 11 (Si *Q* vaut 0, la page correspondante est la première page). Le reste *R* de cette division entière permet de calculer la position relative pointée par le dispositif sur la page (*Q*+1). En divisant entièrement ce reste *R* par le nombre d'adresses *H* par lignes, on obtient le quotient *J* et le reste *I*, ce qui indique que le crayon 11 pointe sur un au point de coordonnées *(I,J)* par rapport au bord de la *P*^{*ième*} page (*P* valant *Q*+1) du document (en supposant que le premier point a pour coordonnées (0,0)). A titre illustratif, on suppose les hypothèses suivantes :
- le crayon 11 indique une adresse *A* valant 12212 ;
- la table indique *E2* valant 10000 et *F2* valant 20000 ;
- les documents de type T2 correspondant à la plage E2-F2 sont entièrement tramés et correspondent à H et V égaux respectivement à 25 et 40.

Selon ces hypothèses, le terminal 12 détermine successivement les points suivant :
- *A* valant 12212 est compris entre *E2* et *F2*, le type du document est donc le document *D2* de type *T2*
- selon la table, pour les documents de type *T2*, *M* vaut *HV* soit 1000 (valeur lue dans la table 214 ou calculée après lecture de *H* et *V*) ;
- le terminal 11 calcule le numéro de la page : *P* = (A -E2)/M+1 = (12212-10000)/1000+1 = 3 (il s'agit de la 3^{ème} page du document) ;
- puis, à partir du reste R (valant A-(Q-1)M soit 12212-12000= 212), le terminal 11 calcule la position (*I,J*) du crayon sur la 3^{ème} page soit :

- J=R/H=212/25=8;et
- I=R-H.J=212-8.25=12.

Selon cet exemple, le crayon 11 vise un point de coordonnées (12,8) sur la troisième page du document D2.

Suite à l'étape 32 ayant permis de déterminer précisément le document et le point visé par le crayon 11 dans ce document, au cours d'une étape 33, le terminal 12 détermine le lieu géographique correspondant.

Pour chaque document référencé, selon la méthode indirecte, le terminal met en oeuvre une table de lieux mémorisée dans la base de données 213 et associant des coordonnées dans chaque page du document à un lieu. Selon une variante de l'invention, le terminal ne comprend pas toutes les bases de données nécessaires et accède à des informations memorisées en partie ou en totalité, à distance et accessibles, par exemple, via un réseau Internet.

Selon l'invention, chaque page de document est découpée en une ou plusieurs zones, chacune de ses zones correspondant à un lieu particulier.

Ainsi, la **figure 5B** illustre une page *P* du document 10. Cette page comprend notamment trois zones 53 à 55 correspondant respectivement à des lieux *I1*, *I2* et *I3*. Les zones mémorisées dans la table 213 sont référencées en fonction de leurs coordonnées avec une correspondance avec un lieu. Plus précisément, la table 213 donne pour chaque page de document référencé, une liste de zones rectangulaires délimitées chacune par les coordonnées (*x1,y1*), (x2,y2) des deux coins opposés du rectangle, chaque zone associant une telle zone rectangulaire à un lieu.
Ainsi, pour la zone 54, la table 213 comprend :
- en entrée les coordonnées (*x1,y1*) et (*x2,y2*) correspondant respectivement à des angles 56 et 57 opposés de la zone 54 associé ; et
- en sortie, le lieu *13* associé à la zone 54.

De cette manière, au cours de l'étape 33, le terminal 12 détermine si la position (*I*,*J*) déterminée au cours de l'étape 32 est contenue dans une zone mémorisée, en recherchant dans la table 213 une ligne *I* comprise entre deux valeurs *x1* et *x2* et une colonne *J* comprise entre *y1* et *y2* d'une zone limitée par des angles de coordonnées (*x1,y1*) et (*x2,y2*).

Dans l'affirmative, le terminal 12 lit dans la table 213 le lieu géographique associé.

Dans la négative, l'adresse pointée par le crayon 11 ne correspond à aucune adresse référencée et le terminal 12 retourne un signal d'erreur.

Suite aux étapes 32 et 33, le mode de réalisation illustré en regard de la figure 3 étant associé à une saisie d'un point unique, l'utilisateur désigne un seul point sur un document. Dans ce cas, l'adresse est transformée en un lieu géographique qui est interprété comme une destination qui est communiquée à des moyens de navigation du terminal 12 au cours d'une étape 34.

Après l'étape 34, l'étape 31 est réitérée.

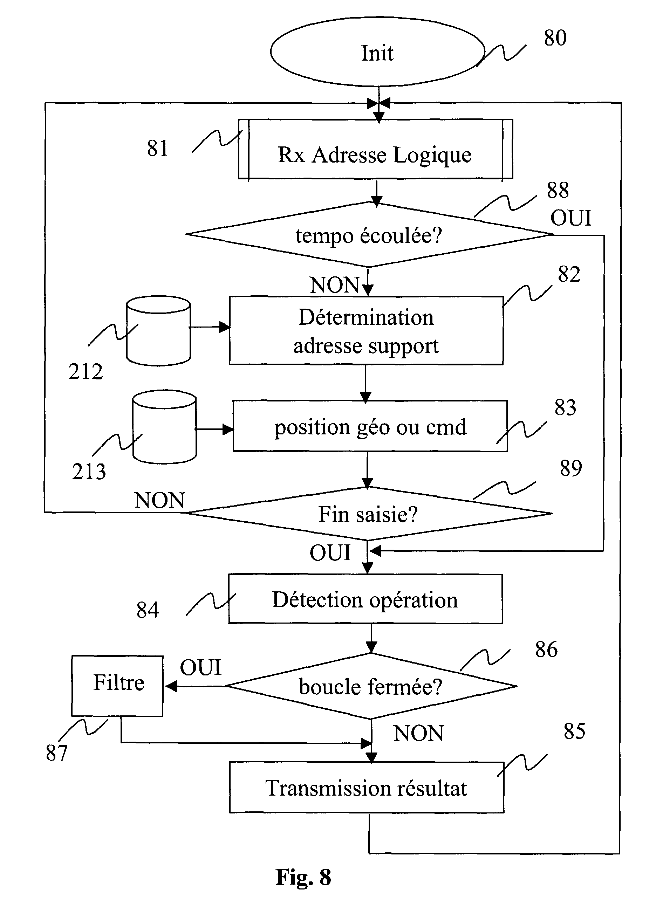

La **figure 8** décrit un algorithme de traitement et de détermination de lieux géographiques, mis en oeuvre dans le terminal 12 et plus précisément par le processeur 20 selon une variante de l'invention permettant plusieurs types de saisie, notamment :
- saisie d'un point unique ;
- saisie d'une courbe ouverte continue ;
- saisie de plusieurs points ;
- saisie d'une courbe fermée ; et/ou
- saisie explicite.

Selon cette variante, le support contient également des informations associées au type d'opération à effectuer sur les données saisies, correspondant à un mode d'opération, par exemple détermination de trajet, identification d'une destination ou d'une région. L'utilisateur peut sélectionner l'un de ces modes. Ensuite, le terminal 12 opère dans le mode sélectionné.

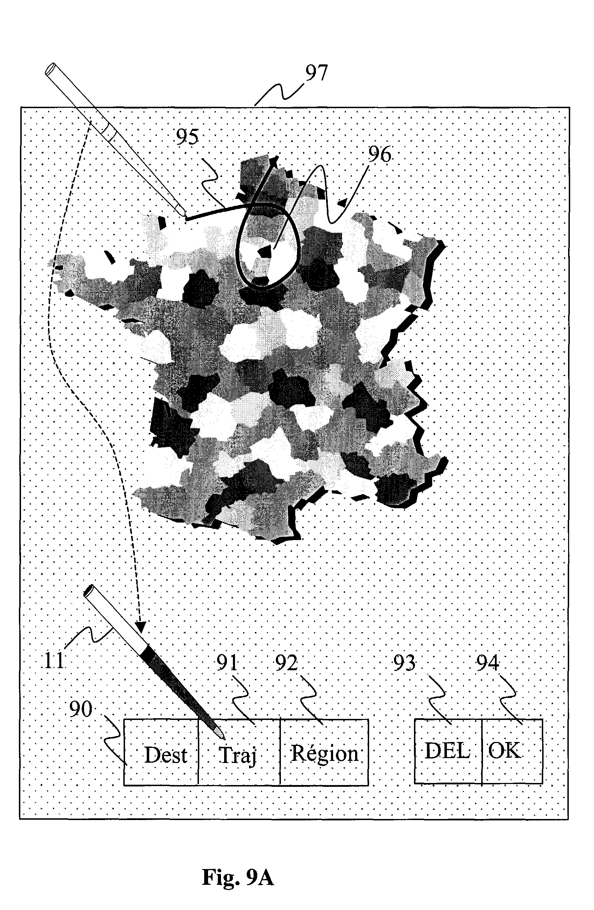

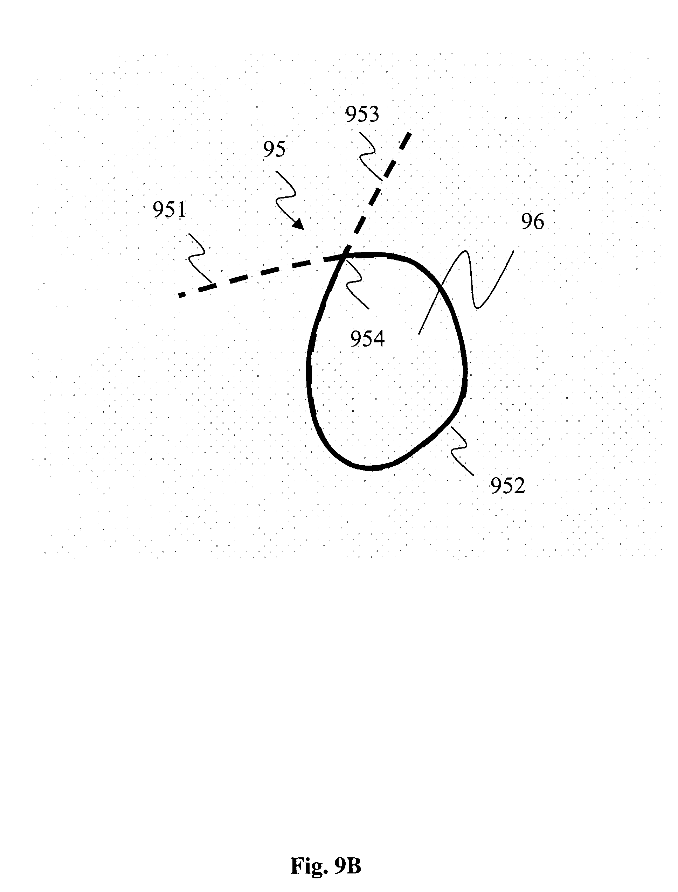

Les figures 9A et 9B illustrent des documents pouvant être lus selon les algorithmes illustrés en regard des figures 3 et 8 et particulièrement bien adaptées au traitement d'informations de commandes associé à l'algorithme de la figure 8.

Ainsi, la **figure 9A**, présente un document 97 qui comprend une information de type carte lisible par l'utilisateur similaire à celle présentée en regard de la figure 6 et des éléments de commandes imprimés également (dans des cases dédiées ou des zones prédéterminées) sur un support contenant les informations d'adresses logiques préimprimées, propres à ce support. Ainsi, les adresses logiques permettent d'identifier sans ambiguïté le support du document 97 et donc la carte et les éléments de commande imprimés sur le document 97.

Les éléments de commandes comprennent notamment les zones suivantes qui sont imprimées et clairement lisibles par l'utilisateur :
- une zone 90 sur laquelle est imprimé un logo de commande indiquant que le terminal doit déterminer les lieux (par exemple une ville) pointés par le crayon 11 ;
- une zone 91 sur laquelle est imprimé un logo signifiant que le terminal 12 doit déterminer une zone plus large que les lieux visés par la zone 90 (par exemple une région) ;
- une zone 92 sur laquelle est imprimé un logo correspondant à la détermination d'un trajet ;
- une zone 93 commandant un effacement des données saisies ; et
- une zone 94 indiquant la fin de la saisie.

Selon des variantes de l'invention non représentées, le document 97 comprend des zones propres à indiquer tout autre type d'opération de navigation à effectuer à partir des zones pointées (par exemple calcul de distance) ou de saisie.

Selon d'autres variantes, l'utilisateur peut indiquer explicitement le type d'opération à effectuer par le terminal 12 (mode opératoire ou action sur la saisie) directement à partir de l'interface homme/machine 25 selon un menu interactif et/ou à partir d'un bouton de commande sur le crayon 11.

Lorsque l'on place le crayon 11 sur le document 97, le crayon 11 reconnaît la zone qu'il pointe.

L'utilisateur ayant placé le dispositif sur le document 10 peut actionner le crayon 11 pour saisir plusieurs points ou une suite continue de points formant une boucle fermée ou une ligne ouverte éventuellement sur plusieurs pages du document ou sur plusieurs documents différents.

Par exemple, l'utilisateur peut placer le dispositif sur la carte géographique du document 97 et indiquer une zone géographique 96 en actionnant le dispositif 11 pour former une courbe 95 entourant cette zone. Puis, l'utilisateur peut indiquer le mode opératoire en pointant la zone 91 (détermination de région) et la fin de sa saisie en pointant la zone 94 indiquant la fin de la saisie.

Selon l'invention après transmission des adresses correspondant à la zone sélectionnée 96, au mode opératoire et à la fin de la saisie, du crayon 11 vers le terminal 12, ce dernier détermine la zone pointée (par exemple, ville, région, quartier, rue, ...) en fonction des adresses précédemment reçues et du mode opératoire.

Selon l'algorithme illustré en regard de la figure 8, au cours d'une première étape 80, le terminal 12 charge les différents programmes utiles à la navigation et initialise les données ou variables correspondantes, notamment un mode opératoire par défaut (par exemple détermination de lieu).

Puis, au cours d'une étape 81, le terminal 12 attend une donnée correspondant à une adresse logique lue par le crayon 11 sur le document 10, et transmise via la liaison 14 (et qui peut être associée à une information géographique ou à une commande). A la réception d'une donnée, le terminal 12 lance une temporisation (ou réinitialise une temporisation préalablement lancée) égale, par exemple, à 2s et mémorise l'adresse logique reçue dans le registre 222.

Après écoulement de la temporisation ou réception d'une adresse logique, le terminal vérifie si l'étape 81 s'est achevée par l'écoulement d'une temporisation.

Dans la négative (une adresse logique a été reçue), au cours d'étapes 82 et 83 similaires respectivement aux étapes 32 et 33 précédemment illustrées, le terminal détermine une position sur le document ou support 97 et un lieu géographique ou un élément de commande correspondant à la position déterminée en fonction de l'adresse logique A reçue lors de l'étape précédente et des informations issues des bases de données 212 à 214. Les étapes 82 et 83 correspondent respectivement aux étapes 32 et 33 précédemment illustrées, adaptées à la prise en compte des informations de type éléments de commandes associées à des adresses logiques. La base de données 213, les tables 42 et 53 sont également adaptées pour contenir des informations de types éléments de commande en sus des informations géographiques correspondant aux documents référencés dans la table 212.

Les étapes 82 et 83 étant, par ailleurs, similaires aux étapes respectivement 32 et 33, elles ne seront pas décrites davantage.

Suite à l'étape 83, au cours d'un test 89, le terminal 12 vérifie qu'une commande de fin de saisie à été reçue puis identifiée lors des étapes 81 et 83 précédentes.

Dans la négative, l'étape 81 est réitérée (avec une éventuelle action sur les données saisie si une opération associée à saisie autre que la fin a été demandée par l'utilisateur : par exemple un effacement par action sur la zone 93).

Dans l'affirmative ou après écoulement d'une temporisation détecté lors du test 88, au cours d'une étape 84, le terminal 12 détermine le type d'opération (mode par défaut ou mode explicitement indiqué par l'utilisateur) à effectuer sur les données reçues ainsi que le type de saisie :
- saisie d'un ou de plusieurs points : l'utilisateur a saisi un ou plusieurs points de manière discontinue et une ou plusieurs adresses logiques ont été reçue avant écoulement de la temporisation ou fin de saisie demandée explicitement par l'utilisateur ;
- saisie d'une courbe fermée : l'utilisateur a saisie une suite continue de points formant une suite d'adresses qui sont associées à des lieux géographiques contigus (par action continue sur le crayon 11) délimitant une zone géographique et le terminal 12 a identifié deux adresses logiques identiques dans la suite reçue ;
- saisie d'une courbe ouverte continue : l'utilisateur a saisi une suite continue de points (pour former, par exemple, un itinéraire) et le terminal n'a pas identifié une courbe fermée.

Pour une saisie de plusieurs points, l'utilisateur désigne tour à tour plusieurs points sur le document. Ces points forment une suite d'adresses qui correspond, par exemple, à :
- un trajet passant par tous ces points dans l'ordre indiqué, sans autre condition ;
- des points de passage, les moyens de navigation mettant en oeuvre un dialogue homme/machine séparé pour optimiser selon différents critères l'ordre des points de passage. La saisie d'une courbe fermée est détectée si dans la liste d'adresse communiquée dans l'ordre de saisie, une même adresse figure deux fois. Par exemple dans le cas d'une liste d'adresses *a b c d h i c s,* on peut détecter que l'adresse *c* figure deux fois. Dans ce cas, on forme la liste *c d h i* correspondant à la boucle fermée par l'adresse *c*. La conversion des adresses de cette liste produit une liste de lieux géographique associés ou permet de déterminer une zone géographique ou région délimitée par une liste de lieux formant une enveloppe. L'utilisateur peut alors communiquer au terminal 12 son désir de se rendre dans la région déterminée, ou d'obtenir des renseignements sur cette région. Par exemple, un calcul est alors appliqué produisant le géocentre des lieux indiqués que la distance moyenne entre le géocentre calculé et les lieux indiqués, selon des méthodes connues.

La **figure 9B** illustre la courbe fermée 95 représentée en regard de la figure 91 et comprenant une boucle fermée 952 délimitant la zone 96 et deux extrémités 951 et 953 qui coïncident avec la boucle 952 en un point 954 dont l'adresse figure deux fois dans la séquence de données communiquée par le crayon 11 au terminal 12.

Après l'étape 84, au cours d'un test 86, le terminal 12 détermine si une boucle fermée a été saisie.

Dans l'affirmative, au cours d'une étape 87, le terminal 12 élimine les données saisies qui ne sont pas dans la boucle fermée (les extrémités 951 et 953 selon l'exemple illustré en regard de la figure 9B) pour ne converver (ou extraire) que des adresses logiques sélectionnées appartenant à la boucle fermée pour former une séquence ordonnée.

Dans la négative ou suite à l'étape 87, au cours d'une étape 85, le résultat de la saisie est communiqué à des moyens de navigation du terminal 12.

Plus précisément, pour un mode opératoire de type « recherche de destination » ou demande de renseignement sur une zone géographique (adresses de restaurants par exemple, identification de lieux touristiques, ...), le lieu ou les lieux géographiques correspondant aux adresses saisies (sous forme de suite de points ou de courbes) sont interprétés comme une ou plusieurs destinations qui sont communiquées aux moyens de navigation du terminal 12 au cours de l'étape 85.

Pour un mode opératoire de type détermination de trajets, au cours de l'étape 85, le terminal 12 transmet à ses moyens de communication au moins une suite ordonnée d'au moins deux lieux géographiques (associés à une suite de points ou à une courbe) formant un itinéraire reliant tous ces lieux. Dans le cas d'une suite de lieux, non continue (correspondant à une suite de points saisis tour à tour de manière non continue), le mode opératoire de détermination d'un trajet peut être précisé pour correspondre :
- soit à un trajet passant par tous ces points dans l'ordre indiqué, sans autre condition ;
- soit comme des points de passage, les moyens de navigation mettant en oeuvre un dialogue homme/machine séparé pour optimiser selon différents critères l'ordre des points de passage.

D'autres modes opératoires sont possibles. Ainsi, pour trouver la région associée à une liste de lieux géographiques, le terminal 12 calcule le géocentre des lieux indiqués et la distance moyenne entre le géocentre calculé et les lieux indiqués, selon des méthodes connues. Dans ce cas, au cours de l'étape 85, le terminal 12 communique à ses moyens de navigation, l'information de géocentre calculée.

Après l'étape 85, l'étape 81 est réitérée.

Bien sûr, l'algorithme décrit en regard de la figure 8 est aussi adapté à une lecture d'un document présentant des informations textuelles correspondant également à des zones géographiques tel qu'illustré en regard de la figure 7 qui peut être utilement complété avec des informations correspondant des éléments de commandes telles que les informations présentées dans les zônes 90 à 94 précédemment illustrées. Dans ce cas, une liste de points sélectionnés ou une courbe correspondent à une ou plusieurs informations textuelles géographiques. Quand une information textuelle géographique est sélectionnée plusieurs fois, le terminal ne présentera préférentiellement aux moyens de navigation qu'une seule information textuelle géographique correspondante, éventuellement pondérée en tenant compte du nombre d'adresses sélectionnées correspondantes, afin d'optimiser les traitements et/ou de réduire la transmission de données entre différentes parties du système de navigation.

Selon une variante de l'algorithme illustré en regard de la figure 8, les adresses logiques sont saisies dans une première étape et sont transmises et/ou traitées par le terminal après la fin d'une saisie correspondante, cette dernière étant, par exemple, déterminée par écoulement d'une temporisation ou indication explicite de l'utilisateur sur le terminal et/ou le crayon. Ainsi, les recherches d'adresses et la détermination de positions géographiques et/ou de commandes est limitées aux adresses qui sont sélectionnées, ce qui permet d'optimiser les étapes correspondantes (les adresses correspondants par exemple à des extrémités non utilisées, de boucles fermées et à des données effacées par l'utilisateur n'étant pas traitées).

Selon une autre variante, des indications de zone géographique déterminées et/ou de document identifiées après réception de chaque adresse logique sont affichées en temps réel sur l'écran du terminal 12, ce qui permet à l'utilisateur de contrôler sa saisie et/ou de prendre connaissance rapidement des résultats donnés par le terminal 12.

Bien entendu, l'invention n'est pas limitée aux exemples de réalisation mentionnés ci-dessus.

En particulier, l'homme du métier pourra apporter toute variante dans la définition des applications de navigation : notamment, détermination de lieu géographique, d'itinéraire selon un trajet optimisé ou non en fonction de critères prédéterminés ou saisis à la volée, de calcul de distance, d'aide à la navigation en temps réel dans un véhicule,...

On note que l'invention ne se limite pas aux supports adressables selon le procédé décrit dans les demandes de brevet Anoto ® précédemment indiqués mais s'étend à tout support adressable dont des points ou des zones peuvent être associés à des zones géographiques.

L'invention met en oeuvre des moyens de lecture optique d'adresse de tout type compatible avec le procédé d'adressage, notamment caméra ou lecteur optique dédié, mis en oeuvre, par exemple, sur un crayon, un terminal de communication mobile ou un pointeur dédié.

L'invention concerne également les terminaux de traitement des adresses lues et d'association à des lieux géographiques, qui peuvent être de type terminal de navigation quelconque ou terminal dédié ou non séparé de moyens de navigation.

Les moyens de traitement et/ou de navigation peuvent, selon l'invention, être reliés aux moyens de lecture des adresses par un moyen de communication quelconque filaire ou sans fil.

Selon l'invention, les moyens de traitement et/ou de navigation sont adaptés à retrouver des informations de lieux géographiques et, éventuellement, des éléments de commandes dans des bases de données qui peuvent être mises en oeuvre suivant tout type de support fixe ou amovible : disque dur, disque optique (notamment CD-ROM, DVD-ROM), support magnétique, ... Les bases de données sont en partie ou en totalité intégrées au terminal et/ou accessibles via un lecteur de support de données et/ou encore via une liaison de communication permettant un accès à un site de données distant (par exemple site internet).

On notera que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

## Revendications

1. Procédé de navigation mettant en oeuvre un document (10, 70) sur lequel sont imprimées des données géographiques, **caractérisé en ce qu'**il comprend :
- une étape de sélection et de lecture d'au moins une adresse logique (40, 50) associée à au moins une partie dudit document ;
- une étape d'association (32, 34, 82, 83) de ladite ou desdites adresses logiques sélectionnées à au moins une information géographique (41), ladite étape d'association étant mise en oeuvre par des moyens de traitement (12) et comprenant elle-même :
- une étape de recherche de ladite ou desdites adresses sélectionnées dans une table (53) faisant correspondre un ensemble d'adresses (50) à un ensemble d'au moins un document référencé (51) ; et
- une étape d'identification dudit document dans ledit ensemble ;
- une étape de transfert (34) de ladite ou desdites informations géographiques à des moyens de navigation.

2. Procédé de navigation selon la revendication 1, **caractérisé en ce que** ladite étape d'association comprend une étape de recherche de ladite ou desdites adresses sélectionnées dans une table (42) faisant correspondre un ensemble d'adresses (40) à un ensemble de lieux géographiques (41) et d'au moins un lieu géographique sélectionné correspondant à ladite ou auxdites adresses sélectionnées.

3. Procédé de navigation selon la revendication 2, **caractérisé en ce que** ladite étape d'association comprend une étape de calcul d'au moins une position relative de ladite ou desdites adresses sélectionnées à l'intérieur du document.

4. Procédé de navigation selon la revendication 3, **caractérisé en ce que** ladite étape d'association comprend une étape de détermination d'au moins un lieu géographique sélectionné à partir de ladite ou desdites positions relatives.

5. Procédé de navigation selon l'une quelconque des revendications 1 à 4, **caractérisé en ce que** desdites adresses logiques sélectionnées forment une séquence ordonnée, ladite étape d'association associant ladite séquence à une suite ordonnée de lieux géographiques et ladite étape de transfert transmettant ladite suite ordonnée auxdits moyens de navigation.

6. Procédé selon la revendication 5, **caractérisé en ce que** ladite séquence correspond à une courbe sensiblement continue sur ledit document.

7. Procédé selon l'une quelconque des revendications 5 et 6, **caractérisé en ce que** ladite étape de sélection comprend une étape d'identification d'une boucle fermée (952) dans une suite d'adresses sélectionnée et d'extraction desdites adresses logiques sélectionnées appartenant à ladite boucle fermée pour former ladite séquence ordonnée.

8. Procédé selon l'une quelconque des revendications 1 à 7, **caractérisé en ce que** lesdits moyens de navigation mettent en oeuvre une étape de navigation appartenant au groupe comprenant :
- les déterminations d'itinéraires ;
- les détermination de distance ;
- les détermination de géocentres d'une zône géographique ; et
- l'aide à la navigation en temps réel pour véhicule.

9. Procédé selon la revendication 1 à 8, **caractérisé en ce que** des informations représentatives de commandes sont imprimées sur ledit document et **en ce que** ledit procédé comprend, en outre, les étapes suivantes
- association de ladite ou desdites adresses logiques sélectionnées en au moins une information de commande (90, 91, 92, 93, 94), ladite étape d'association étant mise en oeuvre par lesdits moyens de traitement ; et
- exécution de la commande correspondant à ladite ou auxdites informations de commande associées à ladite ou auxdites adresses logiques sélectionnées.

10. Procédé selon la revendication 9, **caractérisé en ce que** ladite commande appartient au groupe comprenant :
- les commandes (90, 91, 92) de mode opératoire associé à une étape de navigation ; et
- les commandes (93, 94) s'appliquant à ladite étape de sélection et de lecture d'au moins une adresse logique.

11. Procédé selon la revendication 1 à 10, **caractérisé en ce qu'**il comprend une étape d'affichage de ladite ou desdites informations géographiques associées à des adresses logiques sélectionnées.

12. Dispositif de navigation mettant en oeuvre un document (10, 70) sur lequel sont imprimées des données géographiques, **caractérisé en ce qu'**il comprend :
- des moyens de sélection et de lecture (11, 12, 13) d'au moins une adresse logique (40, 50) associée à au moins une partie dudit document ;
- des moyens de traitement (12) adaptés à associer ladite ou lesdites adresses logiques sélectionnées à au moins une information géographique (41) ; et
- des moyens de transfert de ladite ou desdites informations géographiques à des moyens de navigation.

13. Système de navigation mettant en oeuvre un document (10, 70) sur lequel sont imprimées des données géographiques, **caractérisé en ce qu'**il comprend au moins un dispositif comprenant:
- des moyens de sélection et de lecture (11, 12, 13) d'au moins une adresse logique (40, 50) associée à au moins une partie dudit document ;
- des moyens de traitement (12) adaptés à associer ladite ou lesdites adresses logiques sélectionnées à au moins une information géographique (41) ; et
- des moyens de transfert de ladite ou desdites informations géographiques à des moyens de navigation.

14. Produit programme d'ordinateur comprenant des éléments de programme, enregistrés sur un support lisible par au moins un microprocesseur, **caractérisé en ce que** lesdits éléments de programme contrôlent le ou lesdits microprocesseurs pour qu'ils effectuent :
- une étape de sélection et de lecture d'au moins une adresse logique (40, 50) associée à au moins une partie d'un document (10, 70) sur lequel sont imprimées des données géographiques; et
- une étape d'association (32, 34, 82, 83) de ladite ou desdites adresses logiques sélectionnées à au moins une information géographique (41), ladite étape d'association étant mise en oeuvre par des moyens de traitement ; et
- une étape de transfert (34) de ladite ou desdites informations géographiques à des moyens de navigation.

15. Produit programme d'ordinateur, **caractérisé en ce que** ledit programme comprend des séquences d'instructions adaptées à la mise en oeuvre d'un procédé de navigation selon l'une quelconque des revendications 1 à 11 lorsque ledit programme est exécuté sur un ordinateur.
